# EUROPÄISCHE PATENTSCHRIFT

(11) **EP 2 166 284 B1**
(45) Veröffentlichungstag und Bekanntmachung des Hinweises auf die Patenterteilung: **11.11.2020**
(21) Anmeldenummer: 09169452.1
(22) Anmeldetag: 04.09.2009
(51) Int. Cl.: F23D 14/32, F23D 14/22, F23C 6/04

(54) **Drehtrommelofen und Verfahren zum Betreiben**
Rotary drum furnace and method of operating
Four à tambour rotatif et procédé destiné au fonctionnement

(30) Priorität: 17.09.2008 DE 102008047489
(43) Veröffentlichungstag der Anmeldung: 24.03.2010
(73) Patentinhaber: Messer Group GmbH, 65812 Bad Soden (DE)
(72) Erfinder: Adendorff, Martin, 85386 Eching (DE)
(74) Vertreter: Münzel, Joachim R.

(56) Entgegenhaltungen:
- EP-A2- 1 821 036
- EP-A2- 2 202 460
- EP-B1- 0 663 562
- WO-A1-90/02907
- DE-A1-102004 037 620
- DE-A1-102005 023 435
- US-A- 5 871 343

## Beschreibung

Die Erfindung betrifft einen Drehtrommelofen mit einem als Wärmequelle eingesetzten Brenner zum Verbrennen eines Brennstoffs mit einem sauerstoffreichen Oxidationsmittel, der mit einem Zuleitungskanal für primäres Oxidationsmittel und einem Zuleitungskanal für Brennstoff, die koaxial zueinander angeordnet sind und an einer Brennermündung in einen Brennraum ausmünden, und mit einer Zuleitung für sekundäres Oxidationsmittel, die mit wenigstens zwei an der Brennermündung angeordneten Austrittsöffnungen strömungsverbunden ist, ausgerüstet ist. Die Erfindung betrifft weiterhin ein Verfahren zum Auf- oder Umschmelzen von Aluminium oder Aluminiumverbindungen in einem Drehtrommelofen.

Verbrennungsprozesse, die mit Sauerstoff arbeiten, erhöhen gegenüber Verbrennungsprozessen mit Luft die Leistung einer Ofenanlage, die Einsparung von Primärenergie und/oder die Reduzierung des Volumens der Verbrennungsabgase. In jüngerer Zeit wird der Einsatz von Brennstoff-Sauerstoff-Prozessen zur Erzeugung und anschließenden Entsorgung möglichst reinen Kohlendioxids als Verbrennungsabgas diskutiert.

Die hohe Flammentemperatur der Brennstoff-Sauerstoff-Verbrennung im Vergleich zu Brennstoff-Luft-Verbrennungen führt zu einer verstärkten NOₓ-Bildung. Um dem entgegenzuwirken wurde bereits versucht, die Flammentemperatur durch Bemischungen von Gasen oder durch Rezirkulation der Verbrennungsabgase im Ofenraum zu reduzieren. So ist aus der EP 0 663 562 B1 ein Brenner zum Verbrennen von Brennstoff mit Sauerstoff in Gegenwart rezirkulierender Verbrennungsabgase in einem Verbrennungsofen bekannt. Der Brennstoff wird in einer Brennstoffzuleitung herangeführt, die koaxial um eine primäre Sauerstoffzuführung angeordnet ist. Radial in einem bestimmten Abstand zur Brennstoffzuleitung sind Zuleitungen für sekundären Sauerstoff vorgesehen. Die Rezirkulation des Verbrennungsabgases wird durch einen hohen Impulsstrom des sekundären Sauerstoffs von -bei stöchiometrischer Verbrennung- mindestens 23,6 N/MW mit einer Austrittsgeschwindigkeit von mindestens 310 m/s erreicht. Der hohe Impulsstrom führt zu einer sehr intensiven Durchmischung der im Verbrennungsraum anwesenden Gase und damit zugleich zu einer sehr gleichmäßigen Temperaturverteilung.

Der in dieser Druckschrift beschriebene Brenner hat sich in der Praxis vielfach bewährt. Nachteilig bei diesem Brenner ist jedoch die starke mit dem hohen Impulsstrom des Brennstoffs verbundene Lärmbelästigung. Auch ist es fallweise von Vorteil, im Ofenraum keine gleichmäßige Temperaturverteilung zu haben. So führt beispielsweise beim Aufschmelzen von Aluminium der starke Zustrom von Sauerstoff, verbunden mit der hohen Flammentemperatur, zur Oxidation des aufgeschmolzenen Aluminiums. Das zur Vermeidung der Oxidation üblicherweise eingesetzte Abdecksalz führt zur Ausbildung von Krätze, die nur teilweise aufbereitet werden kann und im Übrigen als Sondermüll eine erhebliche Umweltbelastung darstellt. Um den Einsatz von Abdecksalz und die damit einhergehende Krätzebildung zu vermindern, wird in der WO 2002 20859 A1 vorgeschlagen, den Brennstoff im Brennraum des Ofens mit einer genau den stöchiometrischen Verhältnissen entsprechenden Menge an Sauerstoff zu verbrennen. In der Praxis ist eine solche Vorgehensweise jedoch nur schwer zu bewerkstelligen und bedarf eines hohen mess- und regeltechnischen Aufwandes.

Aufgabe der Erfindung ist daher, einen Drehtrommelofen und ein Verfahren zum Auf- und Abschmelzen von Aluminium oder Aluminiumverbindungen in einem Drehtrommelofen anzugeben, der bzw. das die vorgenannten Nachteile vermeidet.

Diese Aufgabe ist gelöst durch einen Drehtrommelofen mit den Merkmalen des Patentanspruchs 1 sowie durch ein Verfahren mit den Merkmalen des Anspruchs 5.

Erfindungsgemäß ist also die Zuleitung für sekundäres Oxidationsmittel mit mindestens zwei Oxidationsmittelzuführungen strömungsverbunden, die jeweils an mindestens einer Austrittsöffnung für sekundäres Oxidationsmittel ausmünden und die jeweils mit Mitteln zum Einstellen des durch die jeweilige Oxidationsmittelzuführung geführten Oxidationsmittelmengenstroms ausgerüstet sind. Als "sauerstoffreiches Oxidationsmittel" wird im Folgenden ein Oxidationsmittel mit einem Sauerstoffanteil betrachtet, der größer als der von Luft ist, insbesondere Sauerstoff mit einer Reinheit von mehr als 90%, bevorzugt mehr als 99% Sauerstoff.

Als Brennstoff können alle Arten von gasförmigen, flüssigen oder pulverförmigen Brennstoffen zum Einsatz kommen, wie Erdgas, Biogas, Öl oder Kohlestaub. Als "Austrittsöffnungen für sekundäres Oxidationsmittel" werden zumindest zwei strömungstechnisch voneinander trennbare Austrittsöffnungen verstanden, deren Geometrie durchaus unterschiedlich sein kann. So kann es sich bei den Austrittsöffnungen um radial beabstandet vom Zuführungskanal für Brennstoff in gleichmäßigen Winkelabständen angeordnete, im Querschnitt ungefähr kreisförmige Austrittsdüsen handeln, von denen ein Teil mit der einen, die übrigen jedoch mit der anderen Oxidationsmittelzuführung strömungsverbunden sind. Den jeweiligen Anforderungen entsprechend sind jedoch auch andere Geometrien der Austrittsöffnungen im Rahmen der Erfindung möglich, beispielsweise in Form kreisbogenförmiger Schlitze, die gleichfalls radial vom Zuführungskanal für Brennstoff beabstandet sind. Generell gilt, das das Vorsehen weniger Austrittsdüsen mit einem großen freien Öffnungsquerschnitt zu einer großen Eindringtiefe des Oxidationsmittels in den Ofenraum führt, während eine Vielzahl kleinerer Austrittsdüsen zu einem großen Oberflächen/Volumen-Verhältnis der aus den Austrittsdüsen austretenden Sauerstoffstrahlen führt, wodurch bei eher geringer Eindringtiefe die Rezirkulation im Ofenraum im Bereich der Austrittsöffnungen begünstigt wird. Der gesamte Mengenstrom an sekundärem Oxidationsmittel wird den jeweiligen Erfordernissen entsprechend auf die Oxidationsmittelzuführungen und damit auf die Austrittsöffnungen verteilt. Dadurch ist eine Möglichkeit für eine asymmetrische Zuführung des sekundären Oxidationsmittels geschaffen, bei der also, bei insgesamt stöchiometrischen oder nahezu stöchiometrischen Verhältnissen zwischen Brennstoff und Oxidationsmittel, in einem ersten Bereich des Brennraums eine oxidierende Atmosphäre mit einem Sauerstoffüberschuss und in einem zweiten Bereich der Brennkammer eine reduzierende Atmosphäre mit einem Unterschuss an Sauerstoff hergestellt wird.

Bevorzugt sind dabei Austrittsöffnungen des sekundären Oxidationsmittels vertikal beabstandet voneinander angeordnet und mit verschiedenen Oxidationsmittelzuleitungen strömungsverbunden. Bei dieser Ausgestaltung werden also in einem (geodätisch gesehen) oberen und unteren Bereich des Brennraumes unterschiedliche Sauerstoffbedingungen geschaffen. Dies ist in vielen Bereichen von Vorteil, beispielsweise wird in der Zementherstellung eine sauerstoffreiche Zone über dem sich im Bodenbereich eines Drehrohrofens befindlichen Zementklinker gewünscht. Bislang werden solche Verhältnisse durch zusätzliche Lanzen zur Sauerstoffinjektion realisiert, wie dies etwa in der US 5 007 823 A beschrieben ist. Ein anderes Beispiel sind Auf- und Umschmelzprozesse bei der Herstellung und Verarbeitung von Aluminium in einem Drehtrommelofen, auf die weiter unten noch eingegangen werden wird. Der erfindungsgemäße Brenner kann somit in vorteilhafter Weise als Wärmequelle für Prozesse in einem Drehtrommelofen eingesetzt werden; jedoch ist auch ein Einsatz des erfindungsgemäßen Brenners in anderen Öfen, beispielsweise Herdöfen, möglich.

Um die Erzeugung von Schadstoffen der Form NOₓ wirksam zu reduzieren, hat es sich als zweckmäßig erwiesen, dass der minimale Abstand A zwischen den Rändern der Austrittsöffnung/en des sekundären Oxidationsmittels und der Austrittsöffnung der Zuführung von Brennstoff jeweils der Ungleichung A<3,9 dₐ folgt, wobei dₐ der Durchmesser der jeweiligen Austrittsöffnung des sekundären Oxidationsmittels ist.

Eine vorteilhafte Weiterbildung der Erfindung sieht vor, dass die Mittel zum Einstellen des durch die Oxidationsmittelzuführungen geführten Oxidationsmittelmengenstroms mit einer elektronischen Steuerung wirkverbunden sind, mittels der die Mengenströme nach einem vorgegebenen Programm oder in Abhängigkeit von im Brennraum gemessenen Parametern geregelt werden.

Beim erfindungsgemäßen Verfahren zum Auf- oder Umschmelzen von Aluminium oder Aluminiumverbindungen in einem Drehtrommelofen wird Brennstoff mit einem sauerstoffreichen Oxidationsmittel verbrannt, das in Form eines primären Oxidationsmittelstroms durch eine primären Zuleitungskanal und eines sekundären Oxidationsmittelstroms durch mindestens zwei Austrittsöffnungen in den Brennraum eingetragen wird, wobei durch die Austrittsöffnungen unterschiedliche Mengenströme an sekundärem Oxidationsmittel in den Brennraum eingetragen werden. Auf diese Weise können in im Querschnitt des Brennraums verschiedene Bereiche mit hohem bzw. niedrigem Sauerstoffgehalt bei der Verbrennung und somit oxidierende und reduzierende Bereiche realisiert werden. Die Verbrennung erfolgt üblicherweise in einem insgesamt stöchiometrischen Verhältnis aus zugeführtem Brennstoff und Oxidationsmittel; In besonderen Fällen, insbesondere bei Vorliegen von brennbaren Stoffen, wie beispielsweise Öl- oder Lackreste im Aufgabegut ist jedoch auch eine überstöchiometrische Zugabe an Oxidationsmittel von Vorteil.

Erfindungsgemäß ist dabei bei einem Brenner, bei dem mindestens zwei Austrittsöffnungen mit einem vertikalen Abstand voneinander angeordnet sind, der Mengenstrom an sekundärem Oxidationsmittel, der durch die obere Austrittsöffnung in den Brennraum eingetragen wird, größer als der durch die untere Austrittsöffnung eingetragene Mengenstrom. Die Austrittsöffnungen müssen dabei nicht genau übereinander angeordnet sein, es genügt, dass sie in vertikaler Hinsicht voneinander beabstandet sind. Eine solche Verfahrensweise führt dazu, dass sich in einem oberen Bereich der Brennkammer eine sauerstoffreiche, oxidierende Atmosphäre ausbildet, im unteren Bereich dagegen eine sauerstoffarme, reduzierende Atmosphäre. Dadurch werden Gegenstände im Bodenbereich von Oxidation sowie von einer zu starken Wärmebeaufschlagung geschützt.

Bei Auf- und Umschmelzprozessen von Aluminiumwerkstoffen in Drehtrommelöfen kann auf diese Weise der Einsatz von Abdecksalz und somit die Ausbildung von Krätze wesentlich vermindert werden. Durch die höheren Flammentemperaturen im oberen (sauerstoffreicheren) Bereich wird das Feuerfestmaterial stärker erhitzt; durch die Drehung der Trommel gelangt das auf diese Weise stark erhitzte Feuerfestmaterial unter das Aufgabegut und sorgen dort für eine zusätzliche Erhitzung des Aufgabegutes.

Eine weiter vorteilhafte Ausgestaltung des erfindungsgemäßen Verfahrens sieht vor, dass im Falle eines gasförmigen Brennstoffs, bevorzugt Erdgas, die Austrittsgeschwindigkeit des Brennstoffs an der Brennermündung zwischen 50 m/s und 100 m/s und die Austrittsgeschwindigkeit des sekundären Oxidationsmittels an der Brennermündung zwischen 50 m/s und 250 m/s beträgt. Es hat sich gezeigt, dass mit diesen Werten insbesondere bei einer ungleichmäßigen Beaufschlagung der Austrittsöffnungen mit sekundärem Sauerstoff eine gute Rezirkulation der Ofenabgase erzielt werden kann. Mit den genannten Werten ist der Impulsstrom des zugeführten Oxidationsmittels trotz vergleichbarer Flammentemperatur und niedriger NOₓ- Werte wesentlich geringer als der in der EP 0 663 562 B1 beschriebene, die Lärmbelastung durch den austretenden Gasstrom somit entsprechend geringer.

Bevorzugt kommt als primäres und/oder sekundäres Oxidationsmittel Sauerstoff einer Reinheit von mindestens 90%, besonders bevorzugt mindestens 99% zum Einsatz. Gegenüber Verbrennung mit Luft oder einem nur sauerstoffangereicherten Gas hat die - zumindest weitgehend - reine Sauerstoffverbrennung den Vorteil, dass das Abgasvolumen verringert und ein höherer thermischer Wirkungsgrad erzielt wird.

Eine weiter vorteilhafte Ausgestaltung des erfindungsgemäßen Verfahrens sieht eine flammenlose Verbrennung in der Brennkammer vor, die durch eine intensive Rezirkulation der Verbrennungsgase in der Brennkammer bewirkt werden kann. Die Bildung thermischer Stickoxide wird weiter reduziert und eine besonders hohe Energieeffizienz erzielt.

Anhand der Zeichnung soll ein Ausführungsbeispiel der Erfindung näher erläutert werden. In schematischen Anzeigen zeigen:

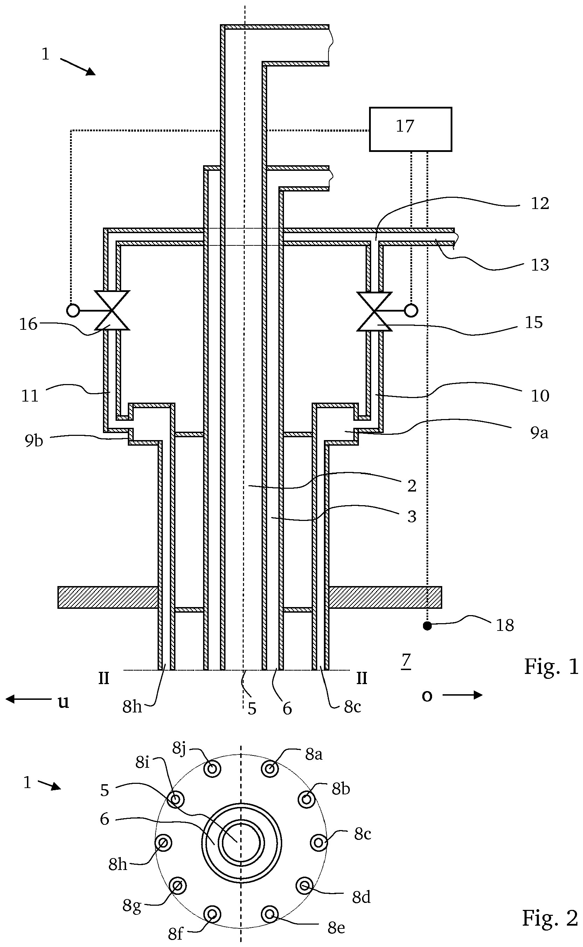

Fig. 1: Einen erfindungsgemäßen Brenner im Längsschnitt und
Fig. 2: die Mündung des Brenners aus Fig. 1 in einer Draufsicht.

Der in den Zeichnungen dargestellte Brenner 1 umfasst einen zentralen Zuleitungskanal 2 für primäres Oxidationsmittel, beispielsweise Sauerstoff, und, konzentrisch zu diesem, einen Zuleitungskanal 3 für Brennstoff. Der Zuleitungskanal 2 ist längs der Brennerachse axial verschiebbar gegenüber dem Zuleitungskanal 3 angeordnet, befindet sich jedoch bevorzugt in einer Position, in der die Austrittsöffnung 5 des Zuleitungskanals 2 und die Austrittsöffnung 6 des Zuleitungskanals 3 sich in einer Ebene befinden. Der Zuleitungskanal 3 kann - etwa entsprechend dem in der EP 0 663 562 B1 gezeigten Brenner - mit Zuleitungskanälen für ein Kühlmedium, beispielsweise Wasser oder Heißdampf, umgeben sein, im hier vorgestellten Ausführungsbeispiel ist eine Kühlung jedoch nicht erforderlich. Die Zuleitungskanäle 2,3 münden mit ihren Austrittsöffnungen 5,6 in das Innere einer Brennkammer 7. Konzentrisch um den Zuleitungskanal 3 sind in regelmäßigen Winkelabständen mehrere, im Ausführungsbeispiel zehn, Austrittsdüsen 8a-8j für sekundäres Oxidationsmittel vorgesehen. Es hat sich als vorteilhaft erwiesen, dass der Durchmesser d einer Austrittsdüse 8a-8j und der minimale Abstand A zwischen dem Außenrand dieser Austrittsdüse und dem Außenrand des Zuleitungskanals 3 für Brennstoff in folgender Beziehung zueinander stehen:
A < 3,9 d

Jeweils die Hälfte, im Ausführungsbeispiel fünf, der Austrittsdüsen 8a-8j sind mit jeweils einer sekundären Oxidationsmittelzuleitung 10, 11 strömungsverbunden: Die Austrittsdüsen 8a-8e sind über eine Verteilungskammer 9a, die die gleichmäßige Verteilung des über die Oxidationsmittelzuleitung 10 herangeführten sekundären Oxidationsmittelmengenstroms auf die Austrittsdüsen 8a-8e bewirkt, mit der Oxidationsmittelzuleitung 10 verbunden, die Austrittsdüsen 8f - 8j entsprechend über eine Verteilungskammer 9b mit der Oxidationsmittelzuleitung 11. Die Oxidationsmittelzuleitungen 10, 11 sind wiederum an einer Verzweigungsstelle 12 an eine Hauptleitung 13 für sekundäres Oxidationsmittel angeschlossen. Um den Mengenfluss durch die Oxidationsmittelzuleitungen 10, 11 zu steuern, sind in den Oxidationsmittelzuleitungen 10 ,11 jeweils Stellventile 15, 16, beispielsweise Magnetventile, angeordnet, mittels derer der Durchfluss an sekundärem Oxidationsmittel durch die Oxidationsmittelzuleitungen 10, 11 unabhängig voneinander eingestellt oder ganz gesperrt werden kann. Dabei ist es vorteilhaft, die Stellventile stets zumindest so weit geöffnet zu halten, dass eine geringe Mindestmenge (beispielsweise 5% der maximalen Menge) an sekundärem Sauerstoff durch die Oxidationsmittelzuleitungen 10,11 hindurch tritt, um die Austrittsdüsen 8a - 8j zu kühlen. Die Stellventile stehen wiederum mit einer Regeleinheit 17 in Datenverbindung, mittels der die Stellventile 15, 16 und somit die Mengenströme durch die Oxidationsmittelzuleitungen 10,11 angesteuert werden. Beispielsweise können die Mengenströme gemäß einem vorgegebenen Programm eingestellt oder in Abhängigkeit von physikalischen oder chemische Messparametern in der Brennkammer 7, die über eine mit der Regeleinheit 17 datenverbundenen Sonde 18 erfasst werden, geregelt werden.

Beim Betrieb des Brenners 1, beispielsweise in einem Drehtrommelofen zum Auf- oder Umschmelzen von Aluminium, ist der Brenner 1 mit seiner Längsachse 4-im Wesentlichen horizontal angeordnet, wie durch die Pfeile u (für geodätisch "unten") und o (für geodätisch "oben") angedeutet. Die Brennkammer 7 hat in diesem Beispiel die Form einer Drehtrommel, die sich um eine zur Längsachse des Brenners 1 im Wesentlichen parallelen Achse dreht. Die Oxidationsmittelzuleitung 11 und die mit ihr strömungsverbundenen Austrittsdüsen 8f - 8j befinden sich auf der Unterseite des Brenners, die Oxidationsmittelzuleitung 10 und die mit dieser strömungsverbundenen Austrittsdüsen 8a-8e dagegen auf der Oberseite des Brenners. In der Brennkammer 7 befindet sich unterhalb der durch die Brennerachse definierten horizontalen Ebene das Schmelzgut, beispielsweise Aluminiumschrott. Das Aufschmelzen des Schmelzguts erfolgt derart, dass der durch die Zuführung 3 eingeleitete Brennstoff mit dem durch die Zuführungen 2 und die Oxidationsmittelzuleitungen 10, 11 in einem insgesamt im Wesentlichen stöchiometrischen Verhältnis eingebrachten Oxidationsmittel verbrannt wird. Insbesondere bei Chargieren des Ofens mit durch Lack- oder Öl kontaminiertem Schrott ist jedoch auch eine insgesamt überstöchiometrische Fahrweise vorteilhaft, da auf diese Weise das bei Verbrennen der Lack- und Ölbestandteile entstehende Kohlenmonoxid (CO) noch im Brennraum 7 verbrannt werden kann. Die zur Herstellung insgesamt überstöchimetrischer Verhältnisse erforderliche Reduzierung der Brennstoffzufuhr und/oder der Erhöhung der Sauerstoffzufuhr kann mittels der Regelung 17 in Abhängigkeit von einem kontinuierlich erfassten Wert der Kohlenmonoxidkonzentration in der Ofenatmosphäre in der Brennkammer 7 oder in der Abluft geregelt werden. Da die Lack- und Ölbestandteile als zusätzlicher Brennstoff wirken, kann als eine Regelgröße auch die Prozesstemperatur in der Brennkammer 7 herangezogen werden, um die Zufuhr von Brennstoff entsprechend dem Brennwert der Lack- und Ölbestandteile zu drosseln.

Durch Betätigung der Stellventile 15, 16 wird dabei der Mengenstrom des durch die Hauptleitung 13 herangeführten sekundären Oxidationsmittels unterschiedlich auf die Oxidationsmittelzuleitungen 10, 11 verteilt. Durch die obere Oxidationsmittelzuleitung 10 wird eine größere Menge an sekundärem Sauerstoff in die Brennkammer 7 eingeleitet als durch die untere Oxidationsmittelzuleitung 11. Dadurch wird im oberen Teil der Brennkammer 7, d.h. oberhalb der durch die Brennerachse definierten horizontalen Ebene, eine sauerstoffreiche, oxidierende Atmosphäre erzeugt, die in diesem Bereich zu hohen Verbrennungstemperaturen führt. Im unteren Bereich der Brennkammer 7 wird dagegen eine sauerstoffarme, reduzierende Atmosphäre mit einer geringeren Verbrennungstemperatur erzeugt. Das Schmelzgut wird daher nicht oder nur in geringem Maße vom austretenden sekundären Oxidationsmittel und hohen Verbrennungstemperaturen angegriffen. Dadurch kann der Einsatz von Abdecksalz und damit die Bildung von Krätze reduziert werden. Die hohen Verbrennungstemperaturen im oberen Bereich der Brennkammer 7 führen zudem zu einer starken Aufheizung des Feuerfestmaterials an den Wänden der Brennkammer 7. Mit der Drehung der trommelförmigen Brennkammer 7 gerät dieses stark erhitzte Feuerfestmaterial unter das Schmelzgut und sorgt für einen zusätzlichen Wärmeeintrag in das Schmelzgut. Dadurch wird der Schmelzprozess insgesamt besonders effizient gestaltet. Die Austrittsgeschwindigkeit des sekundären Oxidationsmittels hängt insbesondere vom Mengenstrom des durch die Oxidationsmittelzuleitung 10, 11 geführten Oxidationsmittels ab. Sie beträgt bei den oberen Düsen 8a - 8e beispielsweise 75 m/s bis 150 m/s, wenn ein Teil des sekundären Oxidationsmittels auch durch die unteren Düsen 8f bis 8j in die Brennkammer 7 eingeleitet wird. Die Austrittsgeschwindigkeit durch die unteren Austrittsdüsen 8 f bis 8j liegt deutlich darunter, bei beispielsweise 50 m/s. Wird das Stellventil 16 in der unteren Oxidationsmittelzuleitung 11 vollständig oder bis auf einen kleinen, der Kühlung der Austrittsdüsen 8f bis 8j dienenden Reststrom geschlossen, beträgt die Austrittsgeschwindigkeit an den Austrittsdüsen 8a - 8e bis zu 250 m/s. Damit bleibt die Austrittsgeschwindigkeit erheblich unter Austrittsgeschwindigkeiten, die im Stand der Technik, z.B. in der EP 0 663 562 B1 beschrieben sind, sie genügen jedoch in Zusammenwirken mit dem durch die unterschiedlichen Austrittsgeschwindigkeiten verursachten asymmetrischen Strömungsprofil um eine sehr intensive Rezirkulation der Ofenatmosphäre herbeizuführen, die auch eine flammenlose Verbrennung erlaubt. Der erfindungsgemäße Brenner wird bevorzugt für Aluminium - Schmelzprozesse in Drehtrommelöfen eingesetzt, seine Einsatzmöglichkeiten sind jedoch nicht herauf beschränkt.

### Bezugszeichenliste

- 1.: Brenner
- 2.: Zuleitungskanal für primären Sauerstoff
- 3.: Zuleitungskanal für Brennstoff
- 5.: Austrittsöffnung des Zuleitungskanals 2
- 6.: Austrittsöffnung des Zuleitungskanals 3
- 7.: Brennkammer
- 8a-8j: Austrittsdüsen für sekundäres Oxidationsmittel
- 9a, 9b:: Verteilungskammer
- 10.: Sekundäre Oxidationsmittelleitung
- 11.: Sekundäre Oxidationsmittelleitung
- 12.: Verzweigungsstelle
- 13.: Hauptleitung für sekundäres Oxidationsmittel
- 14.: -
- 15.: Stellventil
- 16.: Stellventil
- 17.: Regeleinheit
- 18.: Sonde

## Patentansprüche

1. Drehtrommelofen mit einem als Wärmequelle eingesetzten Brenner zum Verbrennen eines Brennstoffs mit einem sauerstoffreichen Oxidationsmittel, der mit einem Zuleitungskanal (2) für primäres Oxidationsmittel und einem Zuleitungskanal (3) für Brennstoff, die koaxial zueinander angeordnet sind und an einer Brennermündung in einen Brennraum (7) ausmünden, und mit einer Zuleitung (13) für sekundäres Oxidationsmittel, die mit wenigstens zwei an der Brennermündung angeordneten Austrittsöffnungen (8a-8j) strömungsverbunden ist, ausgerüstet ist,
**dadurch gekennzeichnet,**
**dass** die Zuleitung (13) für sekundäres Oxidationsmittel mit mindestens zwei Oxidationsmittelzuführungen (10, 11) strömungsverbunden ist, die jeweils an mindestens einer Austrittsöffnung (8a-8e; 8f-8j) für sekundäres Oxidationsmittel ausmünden und die jeweils mit Mitteln (15, 16) zum Einstellen des durch die jeweilige Oxidationsmittelzuführung (10, 11) geführten Oxidationsmittelmengenstroms ausgerüstet sind.

2. Drehtrommelofen nach Anspruch 1, **dadurch gekennzeichnet, dass** Austrittsöffnungen (8a-8f) des sekundären Oxidationsmittels vertikal voneinander beabstandet angeordnet und mit verschiedenen Oxidationsmittelzuleitungen (10,11) strömungsverbunden sind.

3. Drehtrommelofen nach einem der vorhergehenden Ansprüche, **dadurch gekennzeichnet, dass** der minimale Abstand A zwischen dem Rand einer Austrittsöffnung (8a-8j) des sekundären Oxidationsmittels und dem Rand des Zuleitungskanals (3) für Brennstoff der Ungleichung A<3,9 dₐ folgt, wobei dₐ der Durchmesser der Austrittsöffnung (8a-8j) ist.

4. Drehtrommelofen nach einem der vorhergehenden Ansprüche, **dadurch gekennzeichnet, dass** die Mittel (15,16) zum Einstellen des durch die Oxidationsmittelzuführungen geführten Oxiationsmittelmengenstroms mit einer elektronischen Steuerung (17) wirkverbunden sind, mittels der die Mengenströme nach einem vorgegebenen Programm oder in Abhängigkeit von im Brennraum (7) gemessenen Parametern geregelt werden.

5. Verfahren zum Auf- oder Umschmelzen von Aluminium oder Aluminiumverbindungen in einem Drehtrommelofen nach einem der vorhergehenden Ansprüche, bei dem Brennstoff mit einem sauerstoffreichen Oxidationsmittel verbrannt wird, wobei ein primärer Oxidationsmittelstrom durch einen primären Zuleitungskanal (2) des Brenners (1) und ein sekundärer Oxidationsmittelstrom durch mindestens zwei Austrittsöffnungen (8a-8j) des Brenners (1) in den Brennraum (7) eingetragen wird,
**dadurch gekennzeichnet,**
**dass** durch die Austrittsöffnungen (8a-8j) unterschiedliche Mengenströme an sekundärem Oxidationsmittel in den Brennraum (7) eingetragen werden und mindestens zwei Austrittsöffnungen (8a-8j) in einem vertikalen Abstand voneinander angeordnet sind, und der Mengenstrom an sekundärem Oxidationsmittel, der durch die obere Austrittsöffnung/en (8a-8e) in den Brennraum eingetragen wird, größer ist, als der durch die untere Austrittsöffnung/en (8f-8) eingetragene.

6. Verfahren nach Anspruch 5, **dadurch gekennzeichnet, dass** die Austrittsgeschwindigkeit des Brennstoffs an der Mündung seines Zuleitungskanals (3) in den Brennraum (7) zwischen 50 m/s und 100 m/s und die Austrittsgeschwindigkeit des primären Oxidationsmittels an der Mündung seines Zuleitungskanals (2) in den Brennraum (7) zwischen 50 m/s und 250 m/s beträgt.

7. Verfahren nach Anspruch 5 oder 6, **dadurch gekennzeichnet, dass** als primäres und/oder sekundäres Oxidationsmittel Sauerstoff mit einer Reinheit von mindestens 90% zum Einsatz kommt.

8. Verfahren nach Anspruch 5 bis 7, **dadurch gekennzeichnet, dass** die Verbrennung im Brennraum (7) flammenlos erfolgt.

## Claims

1. Rotary drum furnace having a burner used as heat source for burning a fuel with an oxygen-rich oxidant, which is equipped with a feed channel (2) for primary oxidant and a feed channel (3) for fuel which are arranged coaxially and open at a burner mouth into a combustion space (7) and with a feed conduit (13) for secondary oxidant which is fluidically connected to at least two exit openings (8a-8j) arranged at the burner mouth,
**characterized in that** the feed conduit (13) for secondary oxidant is fluidically connected to at least two oxidant feed conduits (10, 11) which each open at at least one exit opening (8a-8e; 8f-8j) for secondary oxidant and are each equipped with means (15, 16) for setting the oxidant flow conveyed through the respective oxidant feed conduit (10, 11) .

2. Rotary drum furnace according to Claim 1, **characterized in that** exit openings (8a-8f) for the secondary oxidant are arranged at a vertical distance from one another and are fluidically connected to different oxidant feed conduits (10, 11).

3. Rotary drum furnace according to either of the preceding claims, **characterized in that** the minimum distance A between the edge of an exit opening (8a-8j) for the secondary oxidant and the edge of the feed channel (3) for fuel obeys the inequality A < 3.9 dₐ, where dₐ is the diameter of the exit opening (8a-8j).

4. Rotary drum furnace according to any of the preceding claims, **characterized in that** the means (15, 16) for setting the oxidant flow conveyed through the oxidant feed conduits are operatively connected to an electronic control (17) by means of which the flows are regulated according to a prescribed program or as a function of parameters measured in the combustion space (7).

5. Method for melting or remelting aluminium or aluminium compounds in a rotary drum furnace according to any of the preceding claims, in which fuel is burnt with an oxygen-rich oxidant, where a primary oxidant stream is introduced through a primary feed channel (2) of the burner (1) and a secondary oxidant stream is introduced through at least two exit openings (8a-8j) of the burner (1) into the combustion space (7),
**characterized in that** different flows of secondary oxidant are introduced into the combustion space (7) through the exit openings (8a-8j) and at least two exit openings (8a-8j) are arranged at a vertical distance from one another and the flow of secondary oxidant which is introduced through the upper exit opening(s) (8a-8e) into the combustion space is greater than that introduced through the lower exit opening(s) (8f-8).

6. Method according to Claim 5, **characterized in that** the exit velocity of the fuel at the mouth of its feed channel (3) into the combustion space (7) is in the range from 50 m/s to 100 m/s and the exit velocity of the primary oxidant at the mouth of its feed channel (2) into the combustion space (7) is in the range from 50 m/s to 250 m/s.

7. Method according to Claim 5 or 6, **characterized in that** oxygen having a purity of at least 90% is used as primary and/or secondary oxidant.

8. Method according to any of Claims 5 to 7, **characterized in that** the combustion in the combustion space (7) occurs without a flame.

## Revendications

1. Four à tambour rotatif comprenant un brûleur utilisé en tant que source de chaleur pour la combustion d'un combustible avec un oxydant riche en oxygène, qui est équipé d'un canal d'alimentation (2) pour de l'oxydant primaire et d'un canal d'alimentation (3) pour du combustible, qui sont agencés coaxialement l'un de l'autre et débouchent au niveau d'une embouchure de brûleur dans une chambre de combustion (7), et d'une conduite d'alimentation (13) pour de l'oxydant secondaire, qui est en communication fluidique avec au moins deux ouvertures de sortie (8a-8j) agencées au niveau de l'embouchure de brûleur, **caractérisé en ce que**
la conduite d'alimentation (13) pour de l'oxydant secondaire est en communication fluidique avec au moins deux conduites d'entrée d'oxydant (10, 11), qui débouchent chacune au niveau d'au moins une ouverture de sortie (8a-8e ; 8f-8j) pour de l'oxydant secondaire et qui sont chacune équipées de moyens (15, 16) pour l'ajustement du débit d'oxydant acheminé par la, conduite d'entrée d'oxydant respective (10, 11).

2. Four à tambour rotatif selon la revendication 1, **caractérisé en ce que** des ouvertures de sortie (8a-8f) de l'oxydant secondaire sont agencées espacées verticalement les unes des autres et en communication fluidique avec différentes conduites d'alimentation d'oxydant (10, 11).

3. Four à tambour rotatif selon l'une quelconque des revendications précédentes, **caractérisé en ce que** l'écart minimal A entre le bord d'une ouverture de sortie (8a-8j) de l'oxydant secondaire et le bord du canal d'alimentation (3) pour du combustible suit l'inégalité A < 3,9 dₐ, dₐ étant le diamètre de l'ouverture de sortie (8a-8j).

4. Four à tambour rotatif selon l'une quelconque des revendications précédentes, **caractérisé en ce que** les moyens (15, 16) pour l'ajustement du débit d'oxydant acheminé par les conduites d'entrée d'oxydant sont reliés activement avec une commande électronique (17), au moyen de laquelle les débits sont régulés selon un programme prédéterminé ou en fonction de paramètres mesurés dans la chambre de combustion (7).

5. Procédé pour la fusion ou refusion d'aluminium ou de composés d'aluminium dans un four à tambour rotatif selon l'une quelconque des revendications précédentes, selon lequel du combustible est brûlé avec un oxydant riche en oxygène, un courant d'oxydant primaire étant introduit par un canal d'alimentation primaire (2) du brûleur (1) et un courant d'oxydant secondaire par au moins deux ouvertures de sortie (8a-8j) du brûleur (1) dans la chambre de combustion (7),
**caractérisé en ce que**
différents débits d'oxydant secondaire sont introduits par les ouvertures de sortie (8a-8j) dans la chambre de combustion (7) et au moins deux ouvertures de sortie (8a-8j) sont agencées à un écart vertical l'une de l'autre, et le débit d'oxydant secondaire qui est introduit par les ouvertures de sortie supérieures (8a-8e) dans la chambre de combustion est supérieur à celui qui est introduit par les ouvertures de sortie inférieures (8f-8).

6. Procédé selon la revendication 5, **caractérisé en ce que** la vitesse de sortie du combustible au niveau de l'embouchure de son canal d'alimentation (3) dans la chambre de combustible (7) est comprise entre 50 m/s et 100 m/s et la vitesse de sortie de l'oxydant primaire au niveau de l'embouchure de son canal d'alimentation (2) dans la chambre de combustible (7) est comprise entre 50 m/s et 250 m/s.

7. Procédé selon la revendication 5 ou 6, **caractérisé en ce que** de l'oxygène ayant une pureté d'au moins 90 % est utilisé en tant qu'oxydant primaire et/ou secondaire.

8. Procédé selon les revendications 5 à 7, **caractérisé en ce que** la combustion dans la chambre de combustible (7) a lieu sans flamme.
